# EUROPÄISCHE PATENTSCHRIFT

(11) **EP 2 053 029 B1**
(45) Veröffentlichungstag und Bekanntmachung des Hinweises auf die Patenterteilung: **12.02.2014**
(21) Anmeldenummer: 08167239.6
(22) Anmeldetag: 22.10.2008
(51) Int. Cl.: C04B 35/532, C04B 35/65, C04B 35/83, C04B 35/573, C04B 35/56

(54) **Verfahren zur Herstellung eines carbidkeramischen Bauteils**
Method for manufacturing of a carbide ceramic component
Procédé destiné à la fabrication d'un composant en céramique de carbure

(30) Priorität: 23.10.2007 DE 102007052230
(43) Veröffentlichungstag der Anmeldung: 29.04.2009
(73) Patentinhaber: Deutsches Zentrum für Luft- und Raumfahrt e.V., 51147 Köln (DE)
(72) Erfinder: Schmidt, Jens, 70736, Fellbach (DE); Nedele, Martin, 72768, Reutlingen (DE)
(74) Vertreter: Hoeger, Stellrecht & Partner Patentanwälte

(56) Entgegenhaltungen:
- EP-A- 1 634 860
- EP-A- 1 741 685
- EP-A- 1 741 687
- WO-A-2007/003428
- DE-A1- 3 108 259
- HEIDENREICH B ET AL: "Schmelzinfiltrierte SiC-Keramiken für Leichtbaupanzerungen" KERAMISCHE ZEITSCHRIFT, DVS VERLAG, DUESSELDORF, DE, Bd. 55, Nr. 10, 1. Januar 2003 (2003-01-01), Seiten 794-798, XP009056915 ISSN: 0023-0561
- QIAN J-M ET AL: "Preparation and properties of porous microcellular SiC ceramics by reactive infiltration of Si vapor into carbonized basswood" MATERIALS CHEMISTRY AND PHYSICS, ELSEVIER, Bd. 82, Nr. 3, 20. Dezember 2003 (2003-12-20), Seiten 648-653, XP002341886 ISSN: 0254-0584
- GREIL P ET AL: "Biomorphic Cellular Silicon Carbide Ceramics from Wood: I. Processing and Microstructure" JOURNAL OF THE EUROPEAN CERAMIC SOCIETY, ELSEVIER SCIENCE PUBLISHERS, BARKING, ESSEX, GB, Bd. 18, Nr. 14, 1. Dezember 1998 (1998-12-01), Seiten 1961-1973, XP004144406 ISSN: 0955-2219
- GREIL P ET AL: "Effect of microstructure on the fracture behavior of biomorphous silicon carbide ceramics" JOURNAL OF THE EUROPEAN CERAMIC SOCIETY, ELSEVIER SCIENCE PUBLISHERS, BARKING, ESSEX, GB, Bd. 22, Nr. 14-15, 1. Januar 2002 (2002-01-01), Seiten 2697-2707, XP004377669 ISSN: 0955-2219

## Beschreibung

Die Erfindung betrifft ein Verfahren zur Herstellung eines carbidkeramischen Bauteils, bei welchem aus einem Ausgangsmaterial ein Vorkörper hergestellt wird, der Vorkörper pyrolysiert wird und nach der Pyrolyse mit Carbidbildner beaufschlagt wird.

Aus der DE 31 08 259 C2 ist ein Verfahren zur Herstellung von Silicium-Carbidkörpern bekannt, bei dem ein Kohlevorkörper ausgehend von feinteiligem Kohlepulver und verkokbarem Bindemittel hergestellt und dann siliciert wird, wobei für die Herstellung des Kohlevorkörpers ein Kohlepulver verwendet wird, das zu 20-Gewichts-% bis 100-Gewichts-% aus Aktivkohle besteht.

Aus der EP 1 634 860 A2 ist ein Verfahren zur Herstellung eines Carbidkeramikmaterials, insbesondere Silicium-Carbidkeramikmaterials bekannt, bei welchem aus einem Ausgangsmaterial, welches zellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium-umfassende Carbidkeramik umgewandelt wird. Zur Herstellung des Ausgangsmaterials werden Kohlenstoff-Kurzfasern verwendet.

Aus der EP 1 544 565 A2 ist ein Platten-Wärmeübertrager bekannt, welcher eine Mehrzahl von Platten umfasst, in welchen Kanäle gebildet sind, wobei die Platten aus einem mit Kurzfasern verstärkten Faserverbundwerkstoff hergestellt sind oder aus Siliciumcarbid hergestellt sind oder aus Siliciumnitrid hergestellt sind.

Aus der DE 10 2004 056 072 A1 ist ein Verfahren zur Herstellung eines Carbidkeramikmaterials mit definiertem gradierten Phasenverteilungsprofil bekannt, bei welchem aus einem Ausgangsmaterial, welches cellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch die Infiltration von Silicium umfassenden Materialien in eine Silicium umfassende Carbidkeramik umgewandelt wird, wobei der Vorkörper mit einem definierten gradierten Dichteprofil hergestellt wird.

Aus der EP 1 741 687 A1 ist ein Verfahren zur Herstellung eines porösen β-SiC-haltigen keramischen Formkörpers bekannt, bei dem ein poröser Kohlenstoff-haltiger Formkörper bereitgestellt wird. Dieser Kohlenstoff-haltige Formkörper wird extrudiert. Es wird eine Mischung von pulverförmigen Kohlenstoffen, organischen Bindemitteln und einer Flüssigphase hergestellt, die nachfolgend unter Erhalt eines Kohlenstoff-haltigen Formkörpers extrudiert wird. Die Mischung enthält Extrudierhilfsmittel, um den Verschleiß und Abrieb an Formwerkzeugen zu verringern.

In dem Artikel "Schmelzinfiltrierte SiC-Keramiken für Leichtbaupanzerungen" von B. Heidenreich und B. Lexow, Keramische Zeitschrift 55 (2003), Seiten 794 - 798 sind C/C-SiC-Werkstoffe beschrieben, die mittels des LSI-Verfahrens hergestellt werden.

Aus der EP 1 741 685 A1 ist ein Verfahren zur Herstellung eines porösen β-SiC-haltigen keramischen Formkörpers bekannt, bei dem ein poröser siliciumhaltiger und kohlenstoffhaltiger Formkörper bereitgestellt wird, welcher pyrolysiert wird und anschließend siliciert wird.

In dem Artikel "Preparation and properties of porous microcellular SiC ceramics by reactive infiltration of Si vapor into carbonized basswood" von J.-M. Qian et al., Materials Chemistry and Physics 82 (2003), Seiten 648 - 653 sind hochporöse mikrozellulare SiC-Keramikmaterialien beschrieben.

Aus der WO 2007/003428 A1 ist ein Verfahren zur Herstellung eines porösen β-SiC-haltigen keramischen Formkörpers bekannt, bei welchem ein Vorkörper aus einer Masse, die siliziumhaltige Partikel, aluminiumhaltige Partikel, kohlenstoffhaltige Partikel und ein verkokbares organisches Bindemittel umfasst, extrudiert wird. Es erfolgt eine Pyrolyse und ein anschließendes Silicieren. Es wird dabei eine Aluminiumschicht unter Erhalt einer Aluminiumoxidschicht oxidiert.

In dem Artikel "Biomorphic Cellular Silicon Carbide Ceramics from Wood: I. Processing and Microstructure" von P. Greil et al. ist die Bearbeitung von zellularen Keramiken mit anisotropen Porenstrukturen durch Infiltration von flüssigem Silicium in carbonisiertes Holz beschrieben.

Der Erfindung liegt die Aufgabe zugrunde, ein Verfahren der eingangs genannten Art bereitzustellen, mit welchem sich carbidkeramische Bauteile endkonturnah mit minimierter Rissbildung herstellen lassen.

Diese Aufgabe wird bei dem eingangs genannten Verfahren erfindungsgemäß dadurch gelöst, dass das Ausgangsmaterial ein Pulver aus aktiviertem Kohlenstoff, ein Bindemittel und Kohlenstoff-Fasern umfasst, wobei eine Faserlänge der Kohlenstoff-Fasern bei höchstens 2 mm liegt und das Ausgangsmaterial in einer Pressform in einem Pressschritt verpresst wird und das Bindemittel ausgehärtet wird, und wobei ein Massenverlust zwischen hergestelltem Bauteil und Vorkörper bezogen auf das Ausgangsmaterial vor der Carbidbildner-Infiltrierung höchstens 30 % beträgt.

Bei der erfindungsgemäßen Lösung wird im Ausgangsmaterial aktivierter Kohlenstoff (in Pulverform) mit Kohlenstoff-Kurzfasern kombiniert. Bei den Temperaturschritten des Herstellungsverfahrens (insbesondere bei einem Pressschritt, beim Pyrolyseschritt und gegebenenfalls einem Carbidbildungsschritt) wird durch die Verwendung des Kohlenstoffpulvers (aus reinem Kohlenstoff) und der Kohlenstoff-Fasern im Ausgangsmaterial der Massenverlust, die Volumenschrumpfung und Dicken- und Längenänderungen zwischen Ausgangsmaterial bzw. Vorkörper und hergestelltem Bauteil minimiert; dieses ist darauf zurückzuführen, dass keine chemischen Änderungen an diesen Bestandteilen des Ausgangsmaterials stattfinden. Dadurch lässt sich eine hohe Maßhaltigkeit erreichen. Dadurch wiederum ist der Bearbeitungsaufwand für das hergestellte carbidkeramische Bauteil minimiert, wenn der Vorkörper entsprechend endkonturnah hergestellt wird.

Durch die aktivierte Oberfläche erfolgt die Carbidbildung bei der Carbidbildner-Infiltration schnell und vollständig. Die bei der Carbidbildung erfolgenden Oberflächenreaktionen erfordern eine Zusammenführung der Reaktanden. Durch die aktivierte Oberfläche steht eine große Kontaktfläche für die Reaktionen bereit. Die Zusammenführung ist kapillarkraftgetrieben. Langsame Diffusionsprozesse spielen höchstens eine untergeordnete Rolle.

Durch Verpressung des Ausgangsmaterials in einer Pressform ist es möglich, als Ausgangsmaterial eine trockene Pulver-Faser-Mischung zu verwenden. Es müssen keine zusätzlichen Extrudierhilfsmittel eingesetzt werden. Dadurch wiederum lässt sich der Massenverlust gering halten, sodass ein carbidkeramisches Bauteil konturnah mit minimierter Rissbildung herstellbar ist.

Durch die Verwendung der Kohlenstoff-Fasern und insbesondere Kurzfasern lässt sich die Rissbildung minimieren. Es lassen sich auch dünnwandige Bauteile herstellen; durch die Kohlenstoff-Fasern wird die Rissbildung während der Temperaturschritte unterbunden.

Durch Wahl der Faserlänge lässt sich das carbidkeramische Bauteil mit Kohlenstoffphase oder ohne Kohlenstoffphase herstellen. Insbesondere lässt sich durch Wahl der Faserlänge der Anteil der Kohlenstoffphase (und deren Verteilung) im carbidkeramischen Bauteil steuern. Wenn längere Kohlenstoff-Fasern verwendet werden, welche beispielsweise eine Länge von 2 mm aufweisen (wobei diese Länge bis in eine Größenordnung von 100 mm gehen kann) erhält man ein "duktileres" carbidkeramisches Bauteil, welches riss-unempfindlicher ist; dieses carbidkeramische Bauteil enthält eine Kohlenstoffphase.

Der Vorkörper, welcher dann pyrolysiert wird, ist ein Grünkörper (Grünling). Der Massenschwund bei der Pyrolyse (und auch bei dem Carbidbildungsprozess), welcher sich in Poren, Rissen, Verwindungen, Verzug und räumlichem Schwund äußern kann, ist minimiert. Dadurch weist das erfindungsgemäße Herstellungsverfahren auch eine hohe Reproduzierbarkeit auf.

Bei der erfindungsgemäßen Lösung wird ein Pulver aus reinem Kohlenstoff eingesetzt. Es hat sich gezeigt, dass, wenn dieses Pulver ein Graphitpulver ist, (Graphit ist nicht aktivierter Kohlenstoff), der Carbidbildungsschritt einen sehr langen Zeitraum benötigt, da die Carbidbildung alleine diffusionsgesteuert ist.

Durch die erfindungsgemäße Lösung lassen sich Verzug, Rissbildung und dergleichen minimieren.

Als Fasern können Faserbündel beispielsweise zwischen 0,5 K und 3 K verwendet werden. Es können auch Einzelfilamente verwendet werden.

Ein Massenverlust bezogen auf das Ausgangsmaterial vor der Carbidbildner-Infiltrierung (nach der Pyrolyse) beträgt höchstens 30 %. Es haben sich Massenverluste kleiner 15 % realisieren lassen. Wenn das Ausgangsmaterial beispielsweise Cellulosepulver anstatt aktiviertem Kohlenstoffpulver enthält, treten Massenverluste in der Größenordnung von 50 % auf.

Weiterhin ist eine Volumenschrumpfung eines hergestellten carbidkeramischen Bauteils bezogen auf den Vorkörper vorzugsweise höchstens 20 %. Bei der Verwendung von Zellulosepulver im Ausgangsmaterial anstatt Pulver aus aktiviertem Kohlenstoffmaterial liegen Volumenschrumpfungen in einer Größenordnung von 40 % vor. Durch die erfindungsgemäße Lösung hat sich eine Volumenschrumpfung unterhalb 10 % realisieren lassen.

Ferner ist es günstig, wenn eine Dickenänderung eines hergestellten carbidkeramischen Bauteils bezogen auf den Vorkörper vorzugsweise höchstens 10% beträgt. Es hat sich eine Dickenschrumpfung von ca. 5 % realisieren lassen. Wenn die Kohlenstoff-Fasern ausgerichtet sind, ist üblicherweise eine Längenschrumpfung in einer Richtung senkrecht zur Dickenrichtung noch kleiner, wenn die Fasern mindestens näherungsweise in der Längenrichtung ausgerichtet sind. Bei der Verwendung von Zellulosepulver anstatt Pulver aus aktiviertem Kohlenstoffmaterial in dem Ausgangsmaterial ist mit einer Dickenschrumpfung in der Größenordnung von 30 % zu rechnen.

Das carbidkeramische Material wird so hergestellt, dass es keine Kohlenstoffphase enthält. Dies erfolgt dadurch, dass Kohlenstoff-Kurzfasern verwendet werden, deren Länge beispielsweise 2 mm nicht überschreitet.

Vorteilhafterweise ist das Ausgangsmaterial eine trockene Faser-Pulver-Mischung. Dadurch ist der Massenverlust minimiert. Eine solche trockene Pulver-Faser-Mischung lässt sich auf einfache Weise in einem Pressgesenk verpressen.

Insbesondere besteht das Ausgangsmaterial aus aktiviertem Kohlenstoff, Bindemittel und Kohlenstoff. Es kann weitere Additive enthalten, welche derart nichtreaktiv sind, dass sie höchstens bei der Carbidbildnerbeaufschlagung Carbid bilden. Das oder die zusätzlichen Bestandteile (Additive) sind während der Aushärtung des Bindemittels und der Pyrolyse nicht flüchtig in dem Sinne, dass sie nicht zum Massenverlust und damit zur Schwindung beitragen. Mögliche Additive sind beispielsweise Graphit oder Carbidmaterial in Pulverform.

Ganz besonders vorteilhaft ist es, wenn der Massenanteil (Gewichtsanteil) an aktiviertem Kohlenstoff im Ausgangsmaterial mindestens 30 % beträgt. Vorteilhafterweise liegt der Massenanteil an aktiviertem Kohlenstoff bei mindestens 35 %. Er kann auch bei 40 % oder mehr liegen. Optimierte Ergebnisse haben sich erhalten lassen, wenn der Massenanteil bei 50 % oder mehr liegt. Je größer der Massenanteil an aktiviertem Kohlenstoff im Ausgangsmaterial ist, desto geringer ist der Massenverlust. Jedoch muss ein bestimmter Mindestanteil an Bindemittel erhalten sein, um einen Vorkörper mit Zusammenhalt herstellen zu können.

Günstig ist es, wenn Pulverpartikel des Kohlenstoffpulvers offenporös sind. Dadurch erhält man eine große Oberfläche (aktivierte Oberfläche) einschließlich einer großen inneren Oberfläche.

Insbesondere ist ein (mittleres) Porenvolumen des offenporösen Kohlenstoffmaterials größer 0,1 ml/g und insbesondere größer als 0,2 ml/g.

Es ist ferner günstig, wenn eine (mittlere) Porengröße größer 0,1 nm ist und insbesondere größer als 0,3 nm. Poren, deren Größe im Nanometerbereich liegen, werden auch als Mikroporen bezeichnet. Die Porengröße kann bis zu einige Mikrometer (Makroporen) betragen.

Weiterhin ist es günstig, wenn Pulverpartikel des Kohlenstoffpulvers (im Mittel) eine aktive Oberfläche größer als 200 m²/g aufweisen und insbesondere eine aktive Oberfläche größer als 400 m²/g aufweisen. (Holzkohle weist eine Oberfläche von ca. 50 m²/g bis 80 m²/g auf.

Günstig ist es, wenn Pulverpartikel des Kohlenstoffpulvers eine aktive Oberfläche aufweisen, welche mindestens fünffach oder vorzugsweise mindestens zehnfach größer ist als eine Oberfläche einer Hüllkugel der entsprechenden Pulverpartikel. Dadurch ergibt sich eine hohe aktive Oberfläche und dadurch wiederum lässt sich der Massenschwund minimieren.

Das Pulver aus aktiviertem Kohlenstoff umfasst insbesondere Aktivkohle oder besteht aus Aktivkohle. Aktivkohle kann aus dichten Ausgangsmaterialien wie beispielsweise Steinkohle hergestellt werden. Durch eine geeignete Aktivierung wird mikrokristalliner Kohlenstoff erzeugt, der von statistisch verteilten Poren durchsetzt ist. Feinporige Aktivkohle kann beispielsweise durch Gasaktivierung hergestellt werden. Grobkörnige Aktivkohlen können durch chemische Aktivierung hergestellt werden. Pulverkohle weist einen Korndurchmesser kleiner 0,18 mm auf, wobei 90 % aller Partikel diese genannte Größe haben. Kornkohle weist einen Korndurchmesser größer 0,18 mm auf. Formkohle weist einen Korndurchmesser von größer 1 mm auf.

Alternativ kann das Pulver aus aktiviertem Kohlenstoff pyrolysiertes biomorphes Material umfassen oder aus solchen bestehen. Das biomorphe Material ist beispielsweise Zellulose, welche pyrolysiert wird. Durch die Pyrolysierung erfolgt eine Oberflächenvergrößerung durch Porenherstellung, das heißt Aktivierung. Die Pulverherstellung für das biomorphe Material kann vor oder nach der Pyrolyse stattfinden.

Günstigerweise ist ein mittlerer Korndurchmesser von Pulverpartikeln des Pulvers aus aktiviertem Kohlenstoff höchstens 0,18 mm und insbesondere höchstens 20 µm. Dadurch lässt sich ein Massenverlust bei Temperaturschritten des Herstellungsverfahrens gering halten.

Es ist ferner günstig, wenn das Bindemittel ein polymeres Material ist und dadurch einen hohen Restkohlenstoffgehalt aufweist.

Insbesondere beträgt ein Massenanteil des Bindemittels am Ausgangsmaterial höchstens 45 %. Dadurch lässt sich ein Vorkörper (Grünling) herstellen, welcher bei den nachfolgenden Temperaturschritten eine minimierte Schwindung aufweist.

Ganz besonders vorteilhaft ist es, wenn der Massenanteil an Kohlenstoff-Fasern im Ausgangsmaterial zwischen 5 % und 45 % und vorzugsweise zwischen 10 % und 40 % liegt. Dadurch lässt sich die Rissbildung minimieren.

Die Kohlenstoff-Fasern können beispielsweise in Form von Einzelfilamenten und/oder Faserbündeln verwendet werden. Faserbündel lassen sich in der Regel einfacher handhaben als Einzelfilamente. Durch die Verwendung von Einzelfilamenten kann eine feinere bzw. gleichmäßigere Faserverteilung erreicht werden.

Bei dem erfindungsgemäßen Verfahren ist es grundsätzlich möglich, dass Kohlenstoff-Fasern beliebiger Länge verwendet werden. Abhängig von der Faserlänge kann eingestellt werden, ob das carbidkeramische Bauteil eine Kohlenstoffphase enthält oder nicht. Bei der erfindungsgemäßen Lösung ist es möglich, auch längere Fasern mit einer Faserlänge beispielsweise größer 2 mm zu verwenden (die Verwendung solcher Kohlenstoff-Fasern ist nicht möglich, wenn das Ausgangsmaterial Zellulosepulver anstatt ein Pulver aus aktiviertem Kohlenstoff enthält). Durch die Verwendung solcher "langer" Kohlenstoff-Fasern erhält man ein duktileres, das heißt riss-unempfindlicheres Bauteil. Es ist auch möglich, dass Kohlenstoff-Kurzfasern verwendet werden. Dadurch ist es möglich, die Rissbildung während Temperaturschritten des Herstellungsverfahrens zu unterbinden. Es können dadurch auch dünnwandige Bauteile hergestellt werden.

Es hat sich als günstig erwiesen, wenn eine Faserlänge der Kurzfasern bei höchstens 2 mm und insbesondere bei höchstens 0,7 mm liegt und beispielsweise bei kleiner 0,45 mm liegt. (Die Faserlänge ist insbesondere eine mittlere Länge; es kann auch ein geringerer Anteil an Fasern größerer Länge als angegeben vorhanden sein.) Es lassen sich dadurch auch dünnwandige Bauteile herstellen, wobei während Temperaturschritten des Herstellungsverfahrens die Kohlenstoff-Fasern die Rissbildung unterbinden.

Es kann auch vorgesehen sein, dass das Ausgangsmaterial Carbidmaterialpulver wie beispielsweise SiC-Pulver umfasst. Es lassen sich dadurch Carbidphasen einbringen, die während der weiteren Herstellungsschritte nicht beeinflusst werden. Durch die Einbringung von Carbidmaterial wird die Härte erhöht.

Bei einem Ausführungsbeispiel umfasst das Ausgangsmaterial Graphit insbesondere in Pulverform. Da Kohlenstoff in Graphitform an einer Carbidbildungsreaktion nicht oder höchstens sehr langsam teilnimmt, lässt sich dadurch eine Graphitphase in das carbidkeramische Bauteil einbauen. Dadurch kann eine "intrinsische" Schmierwirkung für das Bauteil erzeugt werden.

Bei einem Ausführungsbeispiel ist der Carbidbildner Silicium und das Carbidmaterial ist dann Siliciumcarbid.

Das hergestellte carbidkeramische Material kann dabei SiSiC sein, wenn es noch eine Siliciumphase enthält, oder SiC, wenn keine Siliciumphase enthalten ist.

Durch die erfindungsgemäße Lösung wird ein carbidkeramisches Bauteil bereitgestellt bzw. mit dem erfindungsgemäßen Ausgangsmaterial lässt sich ein solches herstellen, welches keine Kohlenstoffphase enthält.

Die nachfolgende Beschreibung vorteilhafter Ausführungen dient im Zusammenhang mit den Zeichnungen der näheren Erläuterung der Erfindung. Es zeigen:
- Figur 1: schematisch den Verfahrensablauf eines Ausführungsbeispiels eines erfindungsgemäßen Herstellungsverfahrens; und
- Figur 2: eine REM-Aufnahme eines Anschliffs eines Ausführungsbeispiels eines hergestellten carbidkeramischen Bauteils.

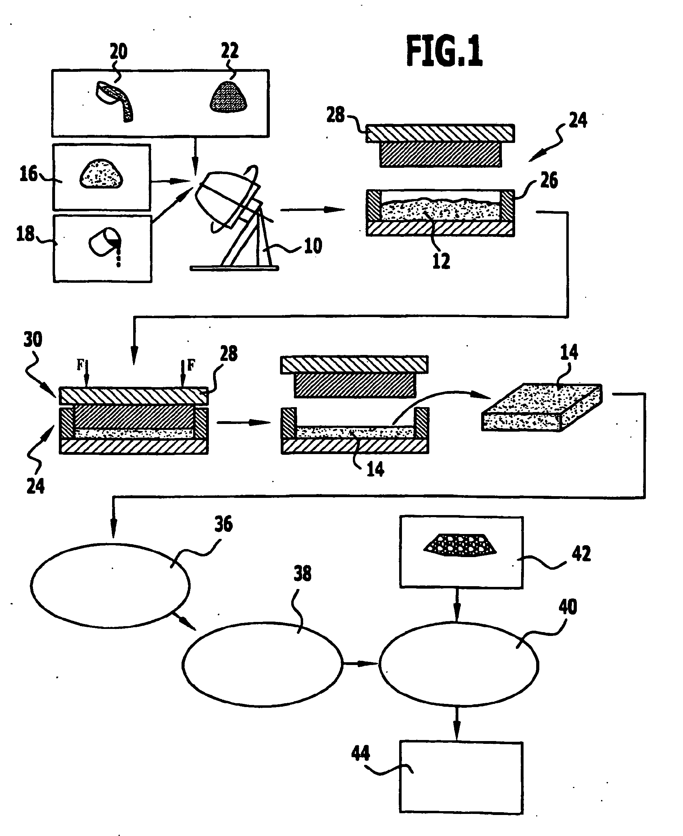

Ein Ausführungsbeispiel eines erfindungsgemäßen Verfahrens zur Herstellung eines carbidkeramischen Bauteils ist schematisch in Figur 1 gezeigt. Durch Vermischen von unterschiedlichen Ausgangsbestandteilen in einer Mischungseinrichtung 10 wird ein Ausgangsmaterial 12 für die Herstellung eines porösen Vorkörpers 14 bereitgestellt. Das Ausgangsmaterial 12 ist eine trockene Pulver-Faser-Mischung.

Das Ausgangsmaterial 12 umfasst als Ausgangsbestandteile ein Pulver 16 aus aktiviertem Kohlenstoff. Der aktivierte Kohlenstoff weist aufgrund einer offenporösen Struktur eine hohe innere aktive Oberfläche auf. Diese Oberfläche eines Pulverpartikels aus aktiviertem (reinen) Kohlenstoff ist mindestens fünffach und vorzugsweise mindestens zehnfach größer als die Oberfläche einer entsprechenden Hüllkugel für die jeweiligen Pulverpartikel.

Das aktivierte Kohlenstoffmaterial ist beispielsweise Aktivkohle. Es ist beispielsweise auch möglich, dass alleine oder in Kombination mit Aktivkohle als aktiviertes Kohlenstoffmaterial ein Pulver aus Kohlenstoff eingesetzt wird, welches aus einem biomorphen Pulver durch Pyrolyse hergestellt wird. Das biomorphe Pulver ist beispielsweise Zellulosepulver, welches durch die Pyrolyse aktiviert wird; durch die Pyrolyse wird durch Porenbildung eine hohe aktive Oberfläche hergestellt.

Pulverpartikel des Kohlenstoffpulvers weisen insbesondere eine aktive Oberfläche größer als 200 m²/g auf.

Das Pulver 16 besteht aus reinem Kohlenstoffmaterial.

Ein mittlerer Korndurchmesser der Pulverpartikel des Pulvers 16 beträgt höchstens 0,18 mm und ist insbesondere kleiner oder gleich 20 µm.

Der Massenanteil (Gewichtsanteil) von aktiviertem Kohlenstoff in dem Ausgangsmaterial beträgt mindestens 30 % und bevorzugterweise mindestens 35 % und beispielsweise mindestens 40 % oder mindestens 45 %.

Das Ausgangsmaterial 12 umfasst ferner ein Bindemittel 18. Das Bindemittel 18 ist ebenfalls pulverförmig. Es weist einen hohen Restkohlenstoffgehalt auf. Das Bindemittel 18 ist insbesondere ein polymeres Bindemittel wie Phenolharz, Pechharz oder dergleichen.

Der Massenanteil des Bindemittels 18 an dem Ausgangsmaterial 12 ist kleiner 45 % und kleiner gleich 40 %.

Das Ausgangsmaterial 12 kann ferner weitere Additive 20 umfassen. Als Additiv kann beispielsweise ein Pulver aus Carbidmaterial eingesetzt werden; beispielsweise wird dem Ausgangsmaterial 12 ein Pulver aus SiC zugegeben. Es kann auch Graphit in Pulverform zugegeben werden.

Ferner umfasst das Ausgangsmaterial 12 Kohlenstoff-Fasern 22. Der Masseanteil der Kohlenstoff-Fasern 22 in dem Ausgangsmaterial 12 liegt zwischen 5 % und 45 % und insbesondere zwischen 10 % und 40 %. Beispielsweise liegt er bei ca. 30 %. Die Faserlänge der Kohlenstoff-Fasern 22 beträgt, wenn Kurzfasern verwendet werden, maximal 2 mm und vorzugsweise ist die Faserlänge kleiner 0,7 mm und kleiner 0,45 mm.

Die Kohlenstoff-Fasern können dabei in der Form von Einzelfasern (Faserfilamenten) und/oder in der Form von Faserbündeln mit beispielsweise 0,5 K bis 3 K verwendet werden.

Die Kohlenstoff-Fasern 22 können direkt der Mischung zugegeben werden oder es kann eine Imprägnierungs-Vorbehandlung erfolgt sein.

Das Ausgangsmaterial 12 wird in eine Pressform 24 gegeben, welche beispielsweise einen Pulveraufnahmeteil 26 und einen Stempelteil 28 umfasst. Der Pulveraufnahmeteil 26 und der Stempelteil 28 sind entsprechend aneinander angepasst.

Die Pressform 24 ist insbesondere so ausgebildet, dass der hergestellte Vorkörper 14 endkonturnah zu einem herzustellenden carbidkeramischen Bauteil ist.

Es kann vorgesehen sein, dass das Ausgangsmaterial 12 mit den Kohlenstoff-Fasern 22 über die Mischungseinrichtung 10 fertig hergestellt wird und dann in das Pulveraufnahmeteil 28 geschüttet wird.

Es ist alternativ auch möglich, dass eine Ausgangsmaterial-Vorstufe ohne die Kohlenstoff-Fasern 22 hergestellt wird und dieses unvollständige Ausgangsmaterial dann unter Zugabe der Kohlenstoff-Fasern 22 in das Pulveraufnahmeteil 26 geschüttet wird. Bei dieser Schüttungsdurchführung kann die Kohlenstoff-Fasern-Zugabe räumlich und/oder zeitlich gesteuert werden und auch mengenmäßig gesteuert werden. Dadurch ist es möglich, einen anisotropen Körper 14 herzustellen, welcher beispielsweise in einem bestimmten Bereich eine höhere Faserdichte aufweist als in einem anderen bestimmten Bereich.

Es kann vorgesehen sein, dass die Pulvermischung aus der Mischungseinrichtung 10 direkt in das Pulveraufnahmeteil 26 der Pressform 24 gegeben wird.

Es ist grundsätzlich möglich, dass das Ausgangsmaterial noch ein oder mehrere Additive enthält. Das oder die Additive sind dabei so gewählt, dass sie bei dem unten beschriebenen Aushärtungsvorgang nicht flüchtig sind und auch bei der Pyrolyse sich nicht zersetzen. Höchstens bei einer anschließenden Carbidbildnerinfiltration kann mit einem Additivmaterial Carbidbildung erfolgen. Mögliche Additive sind beispielsweise Graphit. Der Kohlenstoff zersetzt sich nicht während der Aushärtung und der Pyrolyse und bei einer Carbidbildnerinfiltration kann eine Carbidbildung erfolgen. Ein weiteres mögliches Additiv ist ein Pulver aus Carbidmaterial, welches keiner Reaktion während der Aushärtung, der Pyrolyse und auch der Carbidbildnerinfiltration unterliegt.

In der Pressform 24 wird dann in einem Pressschritt 30 das Ausgangsmaterial 12 verpresst. In einem Aushärtungsvorgang, welcher insbesondere in der Pressform 24 stattfindet, wird das Bindemittel ausgehärtet. In der Pressform 24 wird der Vorkörper 14 hergestellt, welcher dann entnommen wird. Der Vorkörper 14 ist ein Kohlenstoffkörper, welcher eine Porosität aufweist.

Die Pressform 24 ist so ausgestaltet, dass der Vorkörper 14 endkonturnah zu dem bereitzustellenden Bauteil gepresst wird.

Die Länge der Kohlenstoff-Fasern 22 wird beispielsweise so kurz gewählt, dass bei der Herstellung des Vorkörpers 14 durch Pressen ein mindestens näherungsweise flächenisotropes Verhalten des Ausgangsmaterials 12 gewährleistet ist. Weiterhin wird die Faserlänge der Kohlenstoff-Kurzfasern 22 so kurz gewählt, dass bei einem nachfolgenden Pyrolyseschritt ein mindestens näherungsweise flächenisotropes Verhalten des Kohlenstoffkörpers vorliegt.

Der Vorkörper 14 (Kohlenstoffkörper) wird nach einem Trocknungsschritt 36 in einem Pyrolyseschritt 38 pyrolysiert. Die Pyrolyse erfolgt beispielsweise bei einer Temperatur unterhalb von 1650°C in einer Inertgasatmosphäre. Die Trocknung und Pyrolyse läuft grundsätzlich ab wie in der DE 103 29 822 A1 beschrieben, auf die ausdrücklich Bezug genommen wird.

Das Ergebnis der Pyrolyse 38 ist ein offenporöser Kohlenstoffkörper. Dieser wird in einem Carbidbildungsschritt 40 mit Carbidbildner beaufschlagt. Insbesondere erfolgt eine Infiltration des Kohlenstoffkörpers mit flüssigem Carbidbildner.

Beispiele für Carbidbildner sind Silicium und Wolfram.

Durch eine Carbidbildner-Infiltration kann eine Umwandlung in eine Carbidkeramik erfolgen. Die Carbidbildner-Infiltration kann dabei so durchgeführt werden, dass der Carbidbildner vollständig mit dem Kohlenstoff reagiert oder so erfolgen, dass in dem hergestellten Bauteil eine Carbidbildnerphase von nicht-reagiertem Carbidbildner enthalten ist. Über die Faserlänge der Kohlenstoff-Fasern kann eingestellt werden, ob das hergestellte carbidkeramische Bauteil eine Kohlenstoffphase enthält oder nicht. Wenn beispielsweise Kohlenstoff-Fasern einer Länge unterhalb von 2 mm verwendet werden (Kohlenstoff-Kurzfasern), ist bei geeigneter Verfahrensführung ein carbidkeramisches Bauteil ohne Kohlenstoffphase herstellbar. Wenn längere Kohlenstoff-Fasern (oberhalb 2 mm verwendet werden), ist eine Kohlenstoffphase herstellbar.

Wenn längere Kohlenstoff-Fasern verwendet werden, kann dem carbidkeramischen Bauteil über eine entsprechende Faserorientierung eine Vorzugsrichtung gegeben werden. Durch die Verwendung von längeren Kohlenstoff-Fasern ist es möglich, einen rissunempfindlicheren, duktilen Werkstoff zu erhalten. Die Verwendung von Kohlenstoff-Fasern einer Länge beispielsweise oberhalb von 2 mm bei der Verwendung von zellulosehaltigem Pulver im Ausgangsmaterial anstatt Pulver aus aktiviertem Kohlenstoffmaterial ist bisher nicht erfolgreich gewesen.

Bei einem Ausführungsbeispiel, bei dem Si der Carbidbildner ist, kann die Silicium-Infiltration so durchgeführt werden, dass das Bauteil ein Si-Bauteil ohne freie Siliciumphase ist oder die Silicium-Infiltration kann so durchgeführt werden, dass das hergestellte Bauteil ein Si-SiC-Bauteil mit freier Siliciumphase ist. Der Einsatzbereich eines Si-SiC-Materials ist aufgrund der Schmelzbarkeit des enthaltenen metallischen Siliciums auf ca. 1380° C begrenzt.

Als Ausgangsmaterial für die Carbidbildner-Infiltration wird beispielsweise Carbidbildner-Granulat 42 verwendet.

Der Silicierungsschritt ist in der DE 103 29 822 A1 beschrieben, auf die ausdrücklich Bezug genommen wird.

Wenn das Ausgangsmaterial Graphit aufweist, erfolgt für den Kohlenstoff des Graphits keine Carbidbildung. Das Bauteil enthält dann eine Graphitphase. Dadurch kann eine "intrinsische" Schmierwirkung für das Bauteil erreicht werden.

Es ergibt sich ein carbidkeramisches Bauteil 44, welches unter Umständen durch spanbearbeitende Materialbearbeitung beispielsweise mit Diamantwerkzeugen nachbearbeitet wird, um ein fertiges Bauteil herzustellen.

Bei der erfindungsgemäßen Lösung enthält das Ausgangsmaterial 12 neben dem Bindemittel 18 ein Pulver 16 aus aktiviertem Kohlenstoff sowie Kohlenstoff-Fasern.

Das Ausgangsmaterial besteht ausschließlich aus dem Bindemittel 18, dem Pulver 16 aus aktiviertem Kohlenstoff sowie den Kohlenstoff-Fasern oder es kann nichtreaktive Additive enthalten in dem Sinne, dass diese höchstens einer Carbidbildung bei der Carbidbildnerinfiltration unterliegen und während der Aushärtung und der Pyrolyse nicht flüchtig sind.

Durch die Verwendung des aktivierten Kohlenstoffs wird der Masseverlust in den nachfolgenden Schritten (Pressschritt 30, Pyrolyseschritt 38) reduziert, so dass die Materialschrumpfung reduziert wird. Dadurch wird die Maßhaltigkeit verbessert, d.h. der Vorkörper 40 lässt sich endkonturnah bezüglich des fertigen Bauteils 44 herstellen. Der Masseverlust, bezogen auf das Ausgangsmaterial, im Vergleich zu dem Zwischenbauteil vor der Carbidbildner-Infiltrierung nach der Pyrolyse lässt sich unterhalb 30 % halten. Die Volumenschrumpfung eines hergestellten carbidkeramischen Bauteils im Vergleich mit dem Vorkörper lässt sich auf unterhalb von 20 % reduzieren. Weiterhin lässt sich eine Dickenänderung und auch eine Längenänderung des hergestellten carbidkeramischen Bauteils im Vergleich zu dem Vorkörper auf unter 10 % reduzieren.

Durch die Herstellung des Vorkörpers 40 über einen Pressvorgang müssen in das Ausgangsmaterial beispielsweise keine Extrudierhilfsmittel eingebracht werden, da kein Abrieb an einem Formwerkzeug besteht. Ferner kann der Massenverlust und die Schrumpfung minimiert werden, da ein trockenes Ausgangsmaterial 12 verwendet werden kann.

Weiterhin ist die Rissbildung stark verringert. Die Kohlenstoff-Fasern 22 sorgen für eine Unterbindung der Rissbildung während der Temperaturschritte 30, 38 und auch 40.

Es lassen sich dadurch auch dünnwandige Bauteile herstellen.

Durch die erfindungsgemäße Lösung lässt sich ein carbidkeramisches Bauteil mit hoher Maßhaltigkeit und geringer Rissbildung herstellen. Dadurch ist der Nachbearbeitungsaufwand stark verringert.

Ein erfindungsgemäß hergestelltes Bauteil lässt sich beispielsweise bei einer Panzerung einsetzen oder bei einem Hochtemperatur-Wärmeübertrager oder als Offenbauelement. Grundsätzlich lässt sich ein erfindungsgemäß hergestelltes carbidkeramisches Bauteil bei Anwendungen einsetzen, bei denen eine hohe Verschleissfestigkeit und Korrosionsbeständigkeit erforderlich ist.

Bei einem konkreten Ausführungsbeispiel wurde zunächst ein Ausgangsmaterial hergestellt, in dem drei Komponenten in einem Mischer in trockener Pulverform homogen gemischt wurden. Diese drei Komponenten sind Kohlenstoff-Fasern in der Form von Pechfasern als Einzelfilamente; diese weisen eine Faserlänge unterhalb 370 µm und eine Dichte von 1,77 g/cm³ auf. Der Massenanteil der Kohlenstoff-Fasern im Gemisch betrug 30 %.

Die zweite Komponente war chemisch aktivierte Pulverkohle (grobkörnige Aktivkohle) vom Typ CW 20 (Firma Silcarbon). Die Dichte betrug 0,45 g/cm³ und die Korngröße betrug kleiner 300 µm. Der Massenanteil im Ausgangsmaterial betrug 50 %.

Als Bindemittel wurde Phenolharz-Pulver mit einer Dichte von 1,1 g/cm³ und einer Korngröße von ca. 30 µm eingesetzt. Der Massenanteil betrug 20 %.

Die Thermo-Gravimetrie-Kurve des eingesetzten Aktivkohlepulvers zeigt einen Massenverlust von ca. 3,7 % bis zu einer Temperatur von 1.550°C.

Bei einem nachfolgenden Schritt wurde als Vorkörper eine ebene Platte mit den Abmessungen 160 mm x 80 mm x 6,9 mm und einer Masse von 104,3 g und einer (geometrischen) Dichte von 0,65 g/cm³ durch axiales Verpressen in einem Metallgesenk unter Verwendung eines Metallstempels hergestellt. Der Druck betrug 5 MPa, die Haltezeit 10 min bei einer Maximaltemperatur von 180°C.

In einem nachfolgenden Pyrolyseschritt wurde die Platte unter Stickstoff bis 900°C pyrolysiert. Die Masse des entsprechenden C/C-Körpers nach der Pyrolyse betrug 89,8 g; dies entspricht einer Massenabnahme von 13,9 %. Die Volumenschrumpfung betrug 9,5 %, die Dickenschrumpfung 5,2 %, die Längen- und Breitenschrumpfung betrug 2,3 %. Diese ist etwas geringer als die Dickenschrumpfung, da die Kohlenstoff-Fasern in einer Ebene liegen. Die (Archimedes-)Dichte des C/C-Körpers betrug 0,62 g/cm³ und die offene Porosität betrug 66,1 Volumen-%.

In einem Carbidbildner-Infiltrationsschritt wurde der C/C-Verbundkörper mit Silicium bei ca. 1.650°C unter Vakuum (2 mbar) infiltriert. Das Massenangebot an Silicium betrug dabei 370 Massen-% bezogen auf die Ausgangsmasse des Verbundkörpers. Die Massenaufnahme betrug 355 % und es ergab sich ein dichter Verbundkörper.

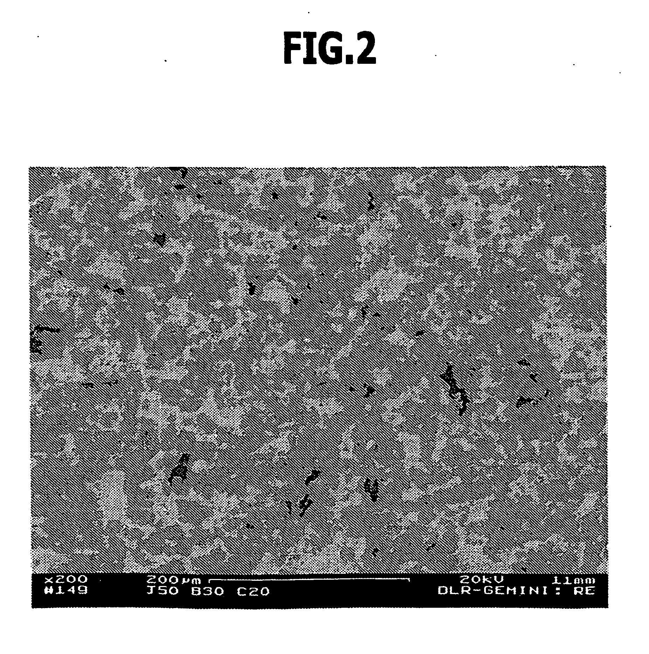

Das Gefüge und die Phasenzusammensetzung ist in dem REM-Bild gemäß Figur 2 gezeigt. Der Verbundkörper umfasst eine SiC-Phase, welche in dem REM-Bild dunkelgrau ist. Ferner ist eine Si-Phase enthalten, welche in Figur 2 hellgrau ist. Weiterhin ist eine Phase an nicht-umgesetztem freien Kohlenstoff enthalten, welcher ein Restbestandteil der Kohlenstoff-Fasern ist. Die Kohlenstoff-Phase ist in Figur 2 schwarz.

Man erkennt, dass das Verbundgefüge gemäß Figur 2 porenfrei und rissfrei ist.

Bei einer weiteren Versuchsdurchführung wurde im Ausgangsmaterial der Massenanteil der aktivierten Pulverkohle mit 40 % gewählt. Der Massenanteil des Bindemittels betrug 30 %. Der Massenanteil an Kohlenstoff-Fasern lag wie oben bei 30 %.

Es hat sich dabei eine Volumenschrumpfung von ca. 13 % ergeben und eine Massenabnahme von ca. 19 %. Die Dichte war gleich wie oben angegeben.

Bei einer weiteren Verfahrensdurchführung wurde der Massenanteil der aktivierten Pulverkohle im Ausgangsmaterial mit 30 % gewählt und der Bindemittelanteil mit 40 %. Der Massenanteil der Kohlenstoff-Fasern im Gemisch betrug wie oben 30 %.

Es ergab sich hier eine Volumenschrumpfung von ca. 14 % und eine Massenabnahme von 22 %. Die Dichte war gleich wie oben angegeben.

Grundsätzlich ist die Volumenschrumpfung und die Massenabnahme und damit der Schwund desto kleiner, desto größer der Massenanteil an Aktivkohle im Ausgangsmaterial ist. Jedoch muss der Anteil an Bindemittel ausreichend groß sein, um eine Bindung herzustellen.

## Patentansprüche

1. Verfahren zur Herstellung eines carbidkeramischen Bauteils (44), bei welchem aus einem Ausgangsmaterial (12) ein Vorkörper (14) hergestellt wird, der Vorkörper (14) pyrolysiert wird und nach der Pyrolyse mit Carbidbildner beaufschlagt wird, wobei das Ausgangsmaterial (12) ein Pulver (16) aus aktiviertem Kohlenstoff, ein Bindemittel (18) und Kohlenstoff-Fasern (22) umfasst, wobei eine Faserlänge der Kohlenstoff-Fasern (22) bei höchstens 2 mm liegt und das Ausgangsmaterial (12) in einer Pressform (24) in einem Pressschritt verpresst wird und das Bindemittel ausgehärtet wird, und wobei ein Massenverlust zwischen hergestelltem Bauteil (44) und Vorkörper (14) bezogen auf das Ausgangsmaterial (12) vor der Carbidbildner-Infiltrierung höchstens 30 % beträgt.

2. Verfahren nach Anspruch 1, **dadurch gekennzeichnet, dass** das Ausgangsmaterial (12) eine trockene Pulver-Faser-Mischung ist.

3. Verfahren nach Anspruch 1 oder 2, **dadurch gekennzeichnet, dass** das Ausgangsmaterial (12) neben aktiviertem Kohlenstoff (16), Bindemittel (18) und Kohlenstoff-Fasern (22) höchstens ein oder mehrere Bestandteile enthält, welche derart nichtreaktiv sind, dass sie höchstens bei der Carbidbildnerbeaufschlagung Carbid bilden.

4. Verfahren nach einem der vorangehenden Ansprüche, **dadurch gekennzeichnet, dass** der Massenanteil an aktiviertem Kohlenstoff (16) im Ausgangsmaterial (12) mindestens 30 % beträgt.

5. Verfahren nach einem der vorangehenden Ansprüche, **dadurch gekennzeichnet, dass** Pulverpartikel des Kohlenstoffpulvers offenporös sind.

6. Verfahren nach einem der vorangehenden Ansprüche, **dadurch gekennzeichnet, dass** Pulverpartikel des Kohlenstoffpulvers eine aktive Oberfläche größer als 200 m²/g aufweisen.

7. Verfahren nach einem der vorangehenden Ansprüche, **dadurch gekennzeichnet, dass** das Pulver (16) aus aktiviertem Kohlenstoff Aktivkohle umfasst oder aus Aktivkohle besteht und/oder das Pulver (16) aus aktiviertem Kohlenstoff pyrolysiertes biomorphes Material umfasst oder aus solchem besteht.

8. Verfahren nach einem der vorangehenden Ansprüche, **dadurch gekennzeichnet, dass** ein mittlerer Korndurchmesser von Pulverpartikeln des Pulvers (16) aus aktiviertem Kohlenstoff höchstens 0,18 mm ist und insbesondere ein mittlerer Korndurchmesser von Pulverpartikeln des Pulvers (16) aus aktiviertem Kohlenstoff höchstens 20 µm ist.

9. Verfahren nach einem der vorangehenden Ansprüche, **dadurch gekennzeichnet, dass** der Massenanteil an Kohlenstoff-Fasern (22) am Ausgangsmaterial zwischen 5 % und 45 % liegt und insbesondere der Massenanteil an Kohlenstoff-Fasern (22) am Ausgangsmaterial (12) zwischen 10 % und 40 % liegt.

10. Verfahren nach einem der vorangehenden Ansprüche, **dadurch gekennzeichnet, dass** eine Faserlänge der Kohlenstoff-Fasern (22) bei höchstens 0,7 mm liegt.

11. Verfahren nach einem der vorangehenden Ansprüche, **dadurch gekennzeichnet, dass** das Ausgangsmaterial (12) Carbidmaterialpulver und/oder Graphit umfasst.

12. Verfahren nach einem der vorangehenden Ansprüche, **dadurch gekennzeichnet, dass** der Carbidbildner Silicium ist und das Carbidmaterial Siliciumcarbid ist.

13. Verfahren nach Anspruch 12, **dadurch gekennzeichnet, dass** das hergestellte carbidkeramische Material SiSiC oder SiC ist.

## Claims

1. Method for producing a carbide ceramic component (44), in which method a preform (14) is produced from a starting material (12), the preform (14) is pyrolyzed and, once pyrolyzed, has a carbide former applied thereto, wherein the starting material (12) comprises a powder (16) of activated carbon material, a binder (18) and carbon fibres (22), wherein a fibre length of the carbon fibres (22) is at most 2 mm and the starting material (12) is compressed in a compression mould (24) in a compression step and the binder is cured, and wherein a mass loss between the produced component (44) and the preform (14) relative to the starting material (12) prior to carbide former infiltration is at most 30 %.

2. Method in accordance with claim 1, **characterized in that** the starting material (12) is a dry powder/fibre mixture.

3. Method in accordance with claim 1 or 2, **characterized in that** apart from activated carbon material (16), binder (18) and carbon fibres (22), the starting material (12) contains at most one or more constituents that are non-reactive in such a way that they form carbide at most when carbide former is applied.

4. Method in accordance with any one of the preceding claims, **characterized in that** the starting material (12) has a content of activated carbon material (16) of at least 30 % by weight.

5. Method in accordance with any one of the preceding claims, **characterized in that** powder particles of the carbon powder are open-pored.

6. Method in accordance with any one of the preceding claims, **characterized in that** powder particles of the carbon powder have an active surface area greater than 200 m²/g.

7. Method in accordance with any one of the preceding claims, **characterized in that** the powder (16) of activated carbon material comprises or consists of activated carbon and/or **in that** the powder (16) of activated carbon material comprises or consists of pyrolyzed biomorphous material.

8. Method in accordance with any one of the preceding claims, **characterized in that** an average grain diameter of powder particles of the powder (16) of activated carbon material is at most 0.18 mm and in particular **in that** an average grain diameter of powder particles of the powder (16) of activated carbon material is at most 20 µm.

9. Method in accordance with any one of the preceding claims, **characterized in that** the starting material has a content of carbon fibres (22) between 5 % by weight and 45 % by weight and in particular in that the starting material (12) has content of carbon fibres (22) between 10 % by weight and 40 % by weight.

10. Method in accordance with any one of the preceding claims, **characterized in that** a fibre length of the carbon fibres (22) is at most 0.7 mm.

11. Method in accordance with any one of the preceding claims, **characterized in that** the starting material (12) comprises carbide material powder and/or graphite.

12. Method in accordance with any one of the preceding claims, **characterized in that** the carbide former is silicon and the carbide material is silicon carbide.

13. Method in accordance with claim 12, **characterized in that** the produced carbide ceramic material is SiSiC or SiC.

## Revendications

1. Procédé destiné à la fabrication d'un composant (44) en céramique de carbure, dans lequel une préforme (14) est fabriquée à partir d'une matière première (12), la préforme (14) est pyrolysée et se voit appliquer un générateur de carbure après la pyrolyse, la matière première (12) comprenant une poudre (16) de charbon actif, un liant (18) et des fibres de carbone (22), la longueur des fibres de carbone (22) étant de 2 mm maximum et la matière première (12) étant pressée de manière à former une préforme (24) au cours d'une étape de pressage et le liant étant durci, et la perte de masse entre le composant (44) fabriqué et la préforme (14) s'élevant à 30 % maximum rapporté à la matière première (12) avant l'infiltration du générateur de carbure.

2. Procédé selon la revendication 1, **caractérisé en ce que** la matière première (12) est un mélange sec de poudre et de fibres.

3. Procédé selon la revendication 1 ou 2, **caractérisé en ce que** la matière première (12) contient, outre le charbon actif (16), le liant (18) et les fibres de carbone (22), tout au plus un ou plusieurs composants qui ne sont pas tellement réactifs au sens où ils forment tout au plus du carbure lors de l'application du générateur de carbure.

4. Procédé selon l'une quelconque des revendications précédentes, **caractérisé en ce que** le pourcentage massique de charbon actif (16) s'élève à au moins 30 % de la matière première (12).

5. Procédé selon l'une quelconque des revendications précédentes, **caractérisé en ce que** les particules de poudre de carbone présentent des pores ouverts.

6. Procédé selon l'une quelconque des revendications précédentes, **caractérisé en ce que** les particules de poudre de carbone présentent une surface active supérieure à 200 m²/g.

7. Procédé selon l'une quelconque des revendications précédentes, **caractérisé en ce que** la poudre (16) de charbon actif comprend du charbon actif ou se compose de charbon actif et/ou **en ce que** la poudre (16) de charbon actif comprend une matière biomorphe pyrolysée ou bien se compose de cette matière.

8. Procédé selon l'une quelconque des revendications précédentes, **caractérisé en ce que** le diamètre de grain moyen des particules de poudre (16) de charbon actif est de 0,18 mm maximum et **en ce que** le diamètre de grain moyen des particules de poudre (16) de charbon actif est notamment de 20 µm maximum.

9. Procédé selon l'une quelconque des revendications précédentes, **caractérisé en ce que** le pourcentage massique de fibres de carbone (22) sur la matière première se situe entre 5 % et 45 % et **en ce que** le pourcentage massique de fibres de carbone (22) sur la matière première (12) se situe notamment entre 10 % et 40 %.

10. Procédé selon l'une quelconque des revendications précédentes, **caractérisé en ce que** la longueur des fibres de carbone (22) est de 0,7 mm maximum.

11. Procédé selon l'une quelconque des revendications précédentes, **caractérisé en ce que** la matière première (12) comprend de la poudre de carbure et/ou du graphite.

12. Procédé selon l'une quelconque des revendications précédentes, **caractérisé en ce que** le générateur de carbure est le silicium et le carbure est le carbure de silicium.

13. Procédé selon la revendication 12, **caractérisé en ce que** la céramique de carbure fabriquée est le SiSiC ou le SiC.
